(19) **Europäisches Patentamt European Patent Office Office européen des brevets**

(11) **EP 1 869 522 B1**

(12) **FASCICULE DE BREVET EUROPEEN**

(45) Date de publication et mention
de la délivrance du brevet:
**14.05.2014 Bulletin 2014/20**

(21) Numéro de dépôt: **06726160.2**

(22) Date de dépôt: **31.03.2006**

(51) Int Cl.:
**G02C 7/02** *(2006.01)*     **G02C 7/06** *(2006.01)*

(86) Numéro de dépôt international:
**PCT/FR2006/000711**

(87) Numéro de publication internationale:
**WO 2006/108942 (19.10.2006 Gazette 2006/42)**

(54) **LENTILLE OPHTALMIQUE**

AUGENOPTISCHE LINSE

OPHTHALMIC LENS

(84) Etats contractants désignés:
**AT BE BG CH CY CZ DE DK EE ES FI FR GB GR HU IE IS IT LI LT LU LV MC NL PL PT RO SE SI SK TR**

(30) Priorité:  **08.04.2005  FR 0503543**

(43) Date de publication de la demande:
**26.12.2007  Bulletin 2007/52**

(73) Titulaire: **ESSILOR INTERNATIONAL (Compagnie Générale d'Optique) 94227 Charenton Cedex (FR)**

(72) Inventeurs:
• **BOURDONCLE, Bernard F-94220 Charenton-le-Pont (FR)**
• **GUILLOUX, Cyril F-94220 Charenton-le-Pont (FR)**
• **JOSSO, Hervé F-94220 Charenton-le-Pont (FR)**

(74) Mandataire: **Hirsch & Associés 58, avenue Marceau 75008 Paris (FR)**

(56) Documents cités:
**FR-A- 2 769 999    FR-A- 2 770 000
FR-A- 2 809 193    FR-A- 2 820 515
FR-A- 2 820 516**

EP 1 869 522 B1

**Description**

La présente invention a pour objet une lentille ophtalmique.

Toute lentille ophtalmique, destinée à être portée dans une monture, est associée à une prescription. La prescription en matière ophtalmique peut comprendre une prescription de puissance, positive ou négative, ainsi qu'une prescription d'astigmatisme. Ces prescriptions correspondent à des corrections à apporter au porteur des lentilles pour corriger les défauts de sa vision. Une lentille est montée dans la monture en fonction de la prescription et de la position des yeux du porteur par rapport à la monture.

Dans les cas les plus simples, la prescription se réduit à une prescription de puissance. La lentille est dite unifocale et présente une symétrie de révolution. Elle est simplement montée dans la monture de sorte que la direction principale du regard du porteur coïncide avec l'axe de symétrie de la lentille.

Pour les porteurs presbytes, la valeur de la correction de puissance est différente en vision de loin et en vision de près, du fait des difficultés d'accommodation en vision de près. La prescription est alors composée d'une valeur de puissance en vision de loin et d'une addition (ou progression de puissance) représentative de l'incrément de puissance entre la vision de loin et la vision de près; ceci revient à une prescription de puissance en vision de loin et à une prescription de puissance en vision de près. Les lentilles adaptées aux porteurs presbytes sont des lentilles multifocales progressives; ces lentilles sont décrites par exemples dans FR-A-2 699 294, US-A-5 270 745 ou US-A-5 272 495, FR-A-2 683 642, FR-A-2 699 294 ou encore FR-A-2 704 327. Les lentilles ophtalmiques multifocales progressives comprennent une zone de vision de loin, une zone de vision de près, une zone de vision intermédiaire, une méridienne principale de progression traversant ces trois zones. Elles sont généralement déterminées par optimisation, à partir d'un certain nombre de contraintes imposées aux différentes caractéristiques de la lentille. Ces lentilles sont généralistes, en ce qu'elles sont adaptées aux différents besoins courants du porteur.

Pour les jeunes presbytes, il a été proposé des lentilles qui ne présentent pas une zone de vision de loin avec un point de référence, à l'inverse des lentilles multifocales progressives classiques; ces lentilles sont décrites dans FR-A-2 588 973. Ces lentilles sont prescrites uniquement en fonction de la puissance nécessaire au porteur en vision de près, indépendamment de la puissance nécessaire au porteur en vision de loin. La lentille offre une partie centrale qui présente une addition de puissance sphérique procurant au porteur une vision de près satisfaisante. Elle présente en outre une légère décroissance de puissance dans la partie supérieure, qui assure au porteur une vision nette aussi au delà du champ habituel de vision de près. Enfin, la lentille présente un point à une valeur de puissance égale à la puissance nominale de vision de près, une zone de puissance plus élevée dans la partie inférieure du verre, et une zone de puissance plus faible dans la partie supérieure du verre.

FR-A-2 769 997 propose une lentille présentant, par rapport à une lentille multifocale progressive classique, une zone de vision de près stabilisée et plus importante, une augmentation significative des largeurs de champs en vision de près et en vision intermédiaire, ainsi qu'une réduction des aberrations et notamment de l'astigmatisme. Elle assure une correction appropriée pour des distances entre 40 et 80 cm et, dans la plupart des cas, pour des distances entre 40 cm et 2 m. Cette lentille est en fait une lentille mi-distance vision de près - vision intermédiaire, privilégiant la vision de près tout en assurant une vision nette au-delà du champ habituel de vision de près. Par contre, aucune vision de loin n'est disponible. Cette lentille s'avère particulièrement bien adaptée au travail sur ordinateur. Elle est prescrite aux jeunes presbytes, uniquement en fonction de la prescription en vision de près. La face arrière de la lentille est usinée pour assurer une puissance en vision de près adaptée à la prescription, sans tenir compte de la prescription en vision de loin. Il suffit de deux faces avant pour couvrir l'ensemble des besoins des porteurs.

FR-A-2 769 999 propose une lentille ophtalmique multifocale progressive présentant une douceur améliorée avec une variation de sphère monotone en fonction de l'angle sur un cercle de rayon 20 mm centré sur le centre géométrique de la lentille de part et d'autre de la méridienne. Cette lentille assure une vision de loin dégagée englobant un secteur angulaire ayant pour origine le centre géométrique de la lentille et un angle au centre supérieur à 150°.

Les lentilles multifocales, qu'elles soient progressives ou dédiées à la vision de près, peuvent comporter une face multifocale complexe (c'est-à-dire n'admettant pas d'axe de révolution, typiquement une surface portant une progression de puissance), par exemple la face opposée au porteur des lunettes, et une face sphérique ou torique, dite face de prescription. Cette face sphérique ou torique permet d'adapter la lentille à l'amétropie de l'utilisateur, de sorte qu'une lentille multifocale n'est généralement définie que par sa surface complexe. On définit pour un produit donné différentes faces complexes, en fonction de l'addition et de la base (ou sphère moyenne en vision de loin). A partir de lentilles semi-finies, dont seule la face multifocale est conformée, il est possible de préparer des lentilles adaptées à chaque porteur, par simple usinage d'une face de prescription sphérique ou torique.

Indépendamment de la prescription de puissance, il peut être proposé à un porteur une prescription d'astigmatisme. Une telle prescription est effectuée par l'ophtalmologiste, en vision de loin, sous la forme d'un couple formé d'une valeur d'axe (en degrés) et d'une valeur d'amplitude (en dioptries). Sur une surface, la valeur d'amplitude représente la différence $1/R_1 - 1/R_2$ entre les courbures principales; la valeur d'axe représente l'orientation, par rapport à un axe de référence et dans un sens de rotation convenu, de la courbure maximale $1/R_1$. En termes de prescription, la valeur d'amplitude représente la différence entre les puissances minimales et maximales dans une direction donnée et l'axe représente l'orientation de la puissance maximale. On utilise le terme astigmatisme pour désigner le couple (amplitude, angle); bien qu'il s'agisse d'un abus de langage, on utilise aussi parfois ce terme pour désigner l'amplitude de l'astigmatisme. Le contexte permet à l'homme du métier de comprendre quelle acception est entendue.

L'invention propose une lentille à laquelle il est plus facile de s'adapter que les lentilles ophtalmiques classiques et qui peut être montée dans une monture selon une méthode simplifiée; elle permet d'assurer au porteur les avantages d'un verre unifocal en vision de loin, avec en outre une bonne accessibilité aux puissances nécessaires à la vision de près et une excellente perception en vision dynamique en limitant les variations de puissance. L'invention propose aussi une lentille présentant une tolérance améliorée aux erreurs de montage ou de prise de mesure.

L'invention propose en conséquence une lentille ophtalmique pour lunettes présentant une surface complexe ayant un centre optique, une méridienne sensiblement ombilique présentant une addition de puissance entre un point de référence en vision de loin et un point de référence en vision de près, la surface complexe ayant :

- une différence de sphère moyenne normalisée à l'addition sur la méridienne, entre le centre géométrique du verre et le point de contrôle en vision de loin, inférieure ou égale à 0,1 ;
- une longueur de progression inférieure ou égale à 14 mm, la longueur de progression étant définie comme la distance verticale entre la croix de montage et le point de la méridienne pour lequel la sphère moyenne atteint 85% de la progression de l'addition ;
- un rebond de la quantité sphère normalisée à l'addition (Sphère/Addition) sur un cercle de rayon 20 mm centré sur le centre géométrique de la lentille inférieur à 0,11 ;
- une pente maximum de la variation de la sphère normalisée à l'addition le long de la méridienne comprise entre 0,09 et 0,11mm$^{-1}$.

Selon un mode de réalisation, la différence de sphère moyenne normalisée à l'addition sur la méridienne, entre le centre géométrique du verre et le point de contrôle en vision de loin, inférieure ou égale à 0,06.

Selon un mode de réalisation, le rebond de la quantité sphère normalisée à l'addition sur le cercle de rayon 20 mm centré sur le centre géométrique de la lentille inférieur à 0,085.

Selon un mode de réalisation, la surface complexe présente, pour la partie de la lentille située au dessus d'une horizontale passant par la croix de montage, une valeur de cylindre inférieure ou égale à la moitié de l'addition de puissance.

Selon un mode de réalisation, la surface complexe présente, autour de la croix de montage, une valeur de sphère moyenne sensiblement constante.

Selon un mode de réalisation, la surface complexe présente une ligne d'isosphère à 0 dioptrie encerclant la croix de montage.

L'invention concerne aussi un équipement visuel comportant au moins une lentille selon l'invention et un procédé de correction de la vision d'un sujet presbyte, comprenant la fourniture au sujet ou le port par le sujet d'un tel équipement.

L'invention concerne en outre un procédé de montage d'une lentille selon l'invention dans un équipement visuel, comprenant :

- la mesure de la position horizontale de la pupille du porteur en vision de loin ;
- la détermination de la hauteur totale du calibre de la monture de l'équipement visuel ;
- le montage dans l'équipement d'une lentille, avec la croix de montage à la position mesurée.

D'autres avantages et caractéristiques de l'invention apparaîtront à la lecture de la description qui suit des modes de réalisation de l'invention, donnés à titre d'exemple et en référence aux dessins qui montrent:

- figure 1, un diagramme des courbures principales et de la sphère sur l'axe d'une lentille selon un premier mode de réalisation de l'invention;
- figure 2, une carte de sphère moyenne de la lentille de la figure 1;
- figure 3, une carte de cylindre de la lentille de la figure 1;
- figures 4 à 6, des figures similaires aux figures 1 à 3, pour une lentille selon un deuxième mode de réalisation de l'invention ;
- figures 7 à 9, des figures similaires aux figures 1 à 3, pour une lentille selon un troisième mode de réalisation de l'invention ;
- figures 10 à 12, des représentations graphiques des valeurs de la sphère normalisée à l'addition sur le cercle de diamètre 40 cm centré sur le centre géométrique de la lentille, en fonction de l'angle, respectivement pour les lentilles des figures 1, 4 et 7.

Dans la suite de la description, on considère, pour la simplicité de l'exposé, le cas d'une lentille présentant une surface complexe et une surface sphérique ou torique. La face complexe de la lentille peut être la face avant (éloignée du porteur), comme cela est le cas pour les lentilles multifocales progressives de l'état de la technique. On considère des lentilles d'un rayon de 30 mm.

De façon connue en soi, en tout point d'une surface complexe, on définit une sphère moyenne D donnée par la formule:

$$D = \frac{n-1}{2}\left(\frac{1}{R_1} + \frac{1}{R_2}\right)$$

où $R_1$ et $R_2$ sont les rayons de courbure maximal et minimal locaux exprimés en mètres,
et n l'indice du matériau constituant la lentille.

On définit aussi un cylindre C, donné par la formule:

$$C = (n-1)\left|\frac{1}{R_1} - \frac{1}{R_2}\right|$$

Les caractéristiques de la face complexe de la lentille peuvent être exprimées à l'aide de la sphère moyenne et du cylindre.

L'invention propose une lentille ophtalmique mulifocale progressive présentant les avantages d'une vision de loin élargie permettant une excellente perception en vision dynamique, avec en outre une bonne accessibilité en vision de près. La lentille permet d'améliorer l'accessibilité aux puissances nécessaires pour une vision de loin nette avec un champ dégagé, en étendant la zone de vision de loin en dessous de la croix de montage. La solution proposée assure aussi une bonne accessibilité aux puissances nécessaires en vision de près, permettant au porteur de voir de façon satisfaisante à des distances égales à environ 40 cm sans l'obliger à beaucoup abaisser les yeux, la zone de vision de près étant accessible dès 14 mm sous la croix de montage. La lentille est ainsi une lentille adaptée à la vision de loin élargie et à la vision de près. La lentille présente une prescription telle que les puissances prescrites au porteur en vision de loin et en vision de près sont atteintes sur la lentille.

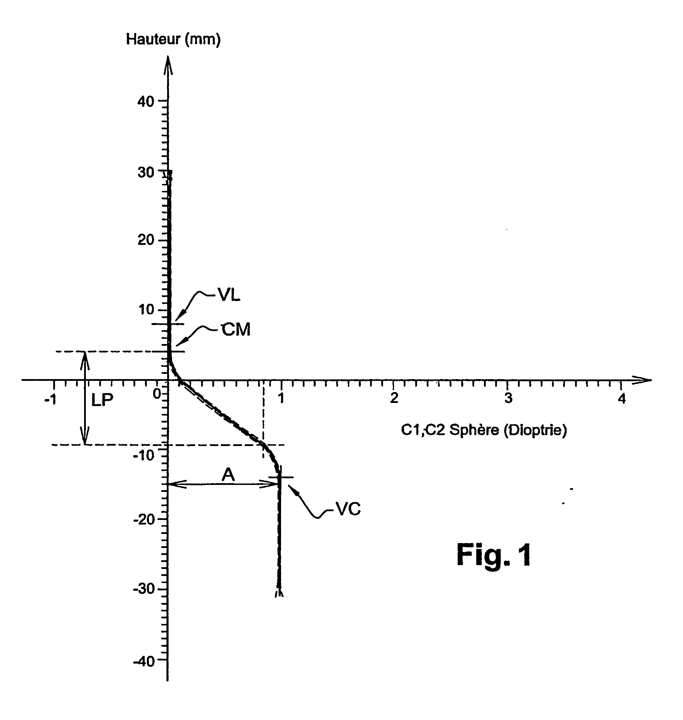

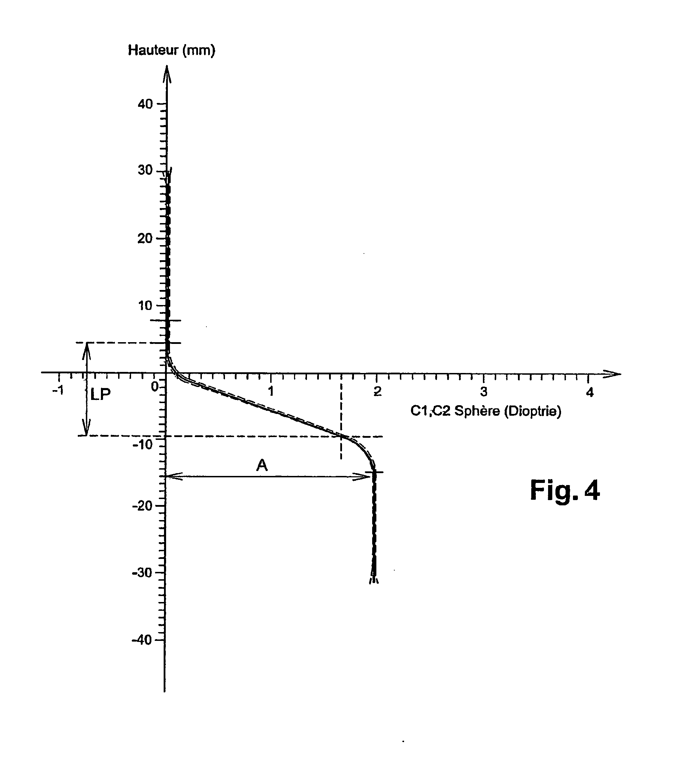

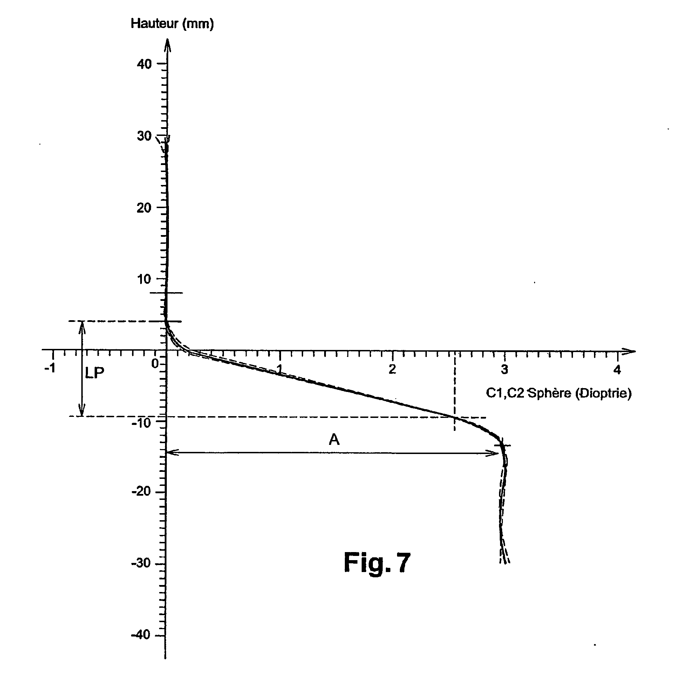

La lentille est décrite dans la suite en référence à trois modes de réalisation. Le premier mode de réalisation, représenté aux figures 1 à 3, est adapté à des porteurs presbytes présentant une prescription de progression de puissance de une dioptrie. Le deuxième mode de réalisation, représenté aux figures 4 à 6, est adapté à des porteurs presbytes présentant une prescription de progression de puissance égale à deux dioptries. Le troisième mode de réalisation, représenté aux figures 7 à 9, est adapté à des porteurs presbytes présentant une prescription de progression de puissance égale à trois dioptries.

Dans les trois modes de réalisation décrits plus bas, la lentille présente une ligne sensiblement ombilique, dite méridienne, sur laquelle l'astigmatisme est quasiment nul. La méridienne est confondue avec l'axe vertical en partie supérieure de la lentille et présente une inclinaison du côté nasal dans la partie inférieure de la lentille, la convergence étant plus marquée en vision de près.

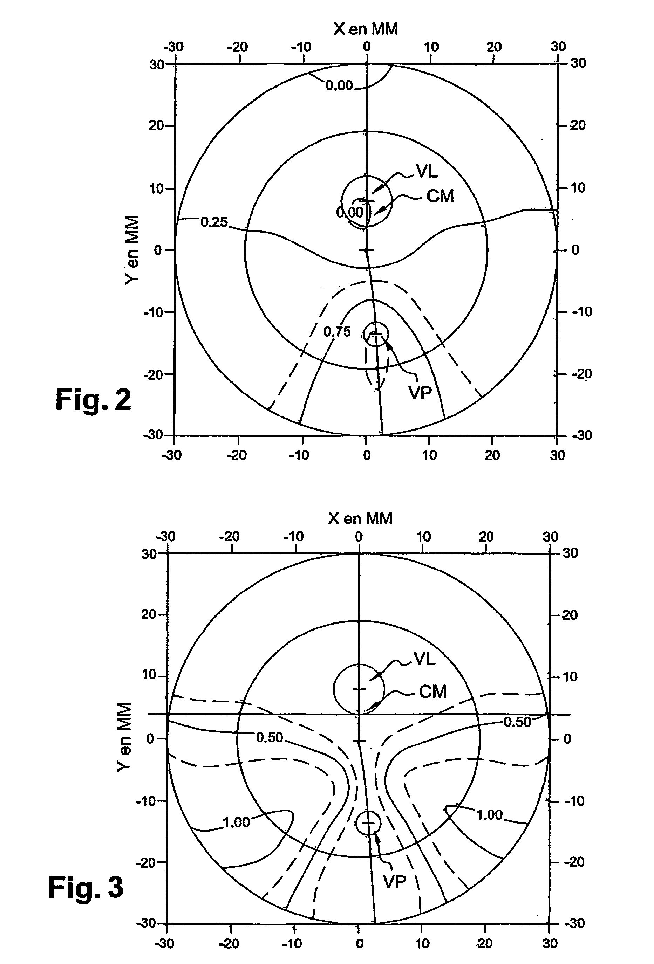

La figure 1 montre un diagramme des courbures principales et de la sphère sur la méridienne d'une lentille selon un premier mode de réalisation de l'invention. Les points sur la surface complexe de la lentille sont repérées sur la figure 1 comme sur les figures 2 et 3 par rapport à un repère orthonormé, ayant pour origine le centre géométrique (0, 0) et dont l'axe des ordonnées est vertical et l'axe des abscisses horizontal. A la figure 1 est portée sur l'axe des abscisses la courbure ou la sphère en dioptries; sur l'axe des ordonnées est repérée la position sur la lentille, en millimètres. La figure 1 montre, à l'ordonnée y = 8 mm, un point de référence en vision de loin VL et, à l'ordonnée y =-14 mm, un point de référence en vision de près VP. La figure montre aussi, à l'ordonnée y = 4 mm, un repère désigné comme la croix de montage CM de la lentille; il s'agit d'un point de centrage matérialisé sur la lentille qui est utilisé par l'opticien pour le montage de la lentille dans la monture. La croix de montage peut être repérée par un point matérialisé sur la lentille, avant montage dans la monture, par une croix ou toute autre marque telle qu'un point entouré d'un cercle tracé sur la lentille, ou par tout autre moyen approprié.

La figure 1 montre en trait plein la sphère et en traits interrompus les courbures principales $(n-1)/R_1$ et $(n-1)/R_2$ sur la méridienne. Les valeurs sont décalées à zéro à l'origine, où la sphère moyenne vaut en réalité 3.45 dioptries. On constate d'abord que le trait plein et les traits interrompus sont confondus - ce qui est représentatif d'un cylindre nul sur la méridienne de la lentille.

On peut ensuite noter que la sphère moyenne sur la méridienne est sensiblement constante sur la moitié supérieure de la lentille. Plus exactement, dans l'exemple de la figure 1, la différence de sphère sur la méridienne, entre le centre géométrique du verre (0, 0) et le point de contrôle en vision de loin VL, est inférieure ou égale à 0,1 dioptrie. La variation de sphère moyenne sur la méridienne dans la partie supérieure de la lentille, au dessus de la croix de montage est sensiblement nulle. Cette caractéristique assure que la lentille équivaut, dans sa partie supérieure et sur la méridienne, à un verre unifocal. En d'autres termes, la progression de puissance s'effectue sous la croix de montage CM de la lentille.

La zone de vision intermédiaire commence généralement, pour une lentille multifocale progressive, au niveau de la croix de montage CM, soit 4 mm au-dessus du centre optique de la lentille. C'est là que commence la progression de puissance. Ainsi, la sphère moyenne croît, depuis la croix de montage CM jusqu'au point de contrôle en vision de près VP, pour des valeurs de l'ordonnée y entre 4 mm et -14 mm. Pour des ordonnées en dessous de y = -14 mm, la sphère moyenne est sensiblement constante, avec une valeur de l'ordre de 1 dioptrie égale à l'addition de puissance A. La variation de sphère moyenne sur la méridienne en dessous du point de contrôle en vision de près VP de la lentille est ensuite sensiblement nulle.

On peut donc définir sur la lentille une addition de puissance A; celle-ci correspond soit à la différence de puissance entre deux points de référence haut VL et bas VP pour la vision distante et rapprochée, soit à une différence entre la valeur de puissance sensiblement constante dans la partie inférieure de la lentille, sur la méridienne, et la valeur de puissance sensiblement constante dans la partie supérieure de la lentille, sur la méridienne. Plus généralement, l'addition de puissance peut être définie comme la différence entre les valeurs maximale et minimale de puissance sur la méridienne de la lentille; cette définition s'applique aussi aux sphères moyennes dans l'exemple d'une lentille caractérisée par une surface complexe. Dans l'exemple de la figure 1, cette valeur de l'addition de puissance entre valeurs maximale et minimale est de 1 dioptrie. On peut encore définir une longueur de progression, désignée LP sur la figure 1, qui est la distance verticale - ou la différence d'ordonnées - entre la croix de montage CM et un point de la méridienne sur lequel la progression de puissance atteint 85% de l'addition de puissance A. Dans l'exemple de la figure 1, en appliquant cette définition à une lentille caractérisée par une surface complexe, une sphère moyenne de 0,85 x 1 dioptrie, c'est-à-dire de 0,85 dioptrie est atteinte pour un point d'ordonnée y =-9,7 mm environ. La longueur de progression LP, entre la croix de montage CM d'ordonnée y = 4 mm et ce point de la méridienne pour lequel la sphère moyenne atteint 85% de l'addition, est égale à 13,7 mm. L'accessibilité aux puissances nécessaires en vision de près est donc inférieure à 14 mm.

On définit aussi une pente maximum de la variation de la sphère normalisée à l'addition comme le maximum de la valeur absolue de la variation de sphère le long de la méridienne divisée par l'addition. Dans l'exemple de la figure 1, en appliquant cette définition à une lentille caractérisée par une surface complexe, la pente maximum de la sphère normalisée à l'addition le long de la méridienne vaut 0.09 mm$^{-1}$.

La figure 2 montre une carte de sphère moyenne de la lentille de la figure 1; comme cela est habituel, on a porté à la figure 2, dans un repère orthonormé, les lignes d'isosphère; ces lignes sont formées des points présentant une même valeur de la sphère moyenne. A la figure 2 sont représentées les lignes d'isosphère 0 dioptrie, 0,25 dioptrie, 0,50 dioptrie et 0,75 dioptrie. La ligne d'isosphère 0 dioptrie encercle la croix de montage CM. La valeur de sphère moyenne est donc sensiblement constante autour de la croix de montage. La variation de sphère quasi nulle autour de la croix de montage permet une certaine tolérance de positionnement lors du montage de la lentille dans l'équipement visuel, comme cela sera expliqué plus loin. La ligne d'isosphère 0,25 dioptrie s'étend sensiblement horizontalement entre les ordonnées -3 mm et 5 mm. Les lignes d'isosphère 0,50 et 0,75 dioptrie sont repérées sur la figure et s'étendent dans la partie inférieure de la lentille, autour de la méridienne.

Sur la figure 2, on a aussi représenté un cercle de diamètre 40 mm centré au centre géométrique (0, 0) de la lentille. Afin d'assurer au porteur un confort visuel maximal, on cherche à maîtriser les variations de la sphère le long de ce cercle ; la vision périphérique du porteur est ainsi améliorée. La maîtrise des variations de la sphère le long de ce cercle implique en l'espèce une limitation du rebond de la quantité sphère normalisée à l'addition.

En particulier, le rebond de la variation de la valeur de la sphère le long de ce cercle, divisée par la valeur de l'addition A, est inférieure à 0, 11. On définit le rebond de la quantité sphère normalisé à l'addition comme: la différence de la valeur de sphère normalisée.à l'addition entre deux extremums locaux situés entre le maximum absolu et le minimum absolue.

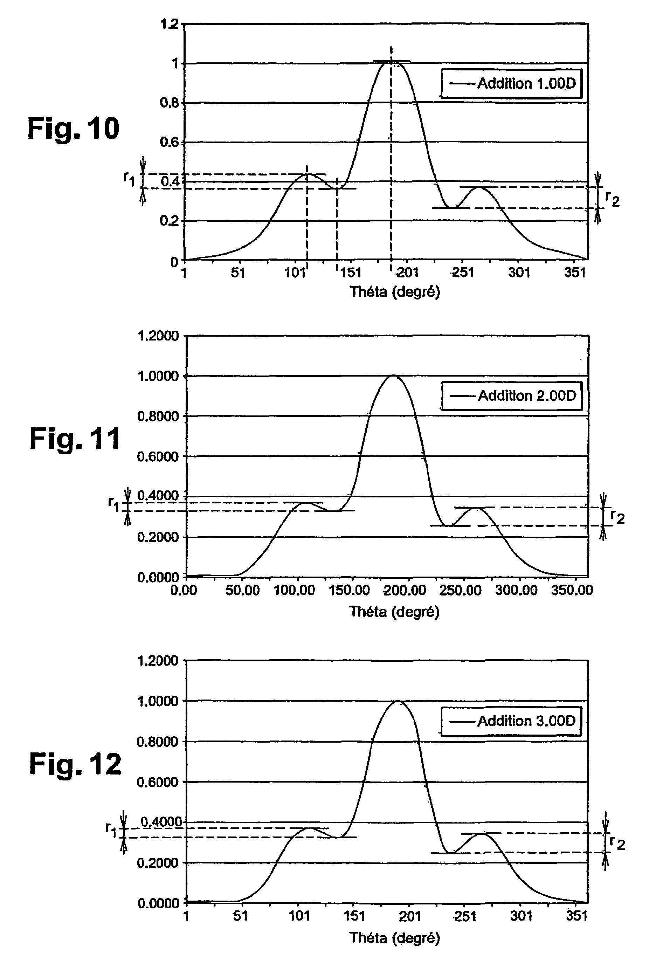

La figure 10, qui sera discutée plus en détails plus bas, représente une courbe de la variation de sphère normalisée à l'addition le long dudit cercle de diamètre 40 mm pour la lentille de la figure 1.

La figure 3 montre une carte de cylindre de la lentille de la figure 1. Sont représentées à la figure les lignes d'isocylindre 0,25 dioptrie, 0,50 dioptrie, 0,75 dioptrie et 1 dioptrie. On constate que la zone de vision de loin est relativement dégagée : les lignes d'isocylindre supérieures à 0,50 dioptrie sont dans la partie inférieure de la lentille, sous la croix de montage CM. On constate aussi que les lignes d'isocylindre s'élargissent, dans la partie inférieure de la lentille, à la hauteur du point de référence pour la vision de près VP. La figure 3 montre aussi que les lignes d'isocylindre sont, pour des ordonnées au dessus du centre géométrique (0, 0), sensiblement parallèles et horizontales. Cette horizontalité des lignes d'isocylindre facilite la vision périphérique et la vision dynamique dans la zone de vision de loin. Par ailleurs, la figure 3 montre une ligne horizontale passant par la croix de montage, à y = 4 mm. On constate qu'au dessus de cette ligne, la valeur du cylindre est inférieure ou égale à la moitié de la valeur de l'addition de puissance A, soit inférieure à 0,5 dioptrie dans l'exemple de la figure 3. La lentille assure donc une large zone de vision de loin, bien dégagée latéralement, ainsi qu'une bonne vision dynamique en vision de loin.

Dans la partie inférieure de la lentille, la lentille présente une zone adaptée à la vision de près; comme indiqué plus haut, la puissance (ou la sphère moyenne) sur la méridienne dans la partie inférieure de la lentille est sensiblement constante et correspond à la puissance prescrite au porteur pour une distance de l'ordre de 40 cm. La lentille fournit donc la correction nécessaire à une vision de près.

Dans la partie inférieure de la lentille, les lignes d'isocylindre 0,25 et 0,50 dioptrie sont quasiment parallèles et verticales et délimitent une zone contenant le point de référence en vision de près VP.

Les figures 4 à 6 sont des vues similaires à celles des figures 1 à 3, mais pour une lentille présentant une addition de puissance de 2 dioptries sur la surface complexe.

On retrouve sur la figure 4 les caractéristiques déjà mises en évidence à la figure 1 - à ceci près que la progression de sphère moyenne sur la méridienne est de l'ordre de 2 dioptries et non plus de 1 dioptrie. La sphère moyenne à l'origine est de 3,45 dioptries. En particulier, dans l'exemple de la figure 4, la différence de sphère sur la méridienne, entre le centre géométrique du verre (0, 0) et le point de référence en vision de loin VL; est comprise entre 0,1 et 0,2 dioptrie. Néanmoins, dans cet exemple, l'addition de puissance étant de 2 dioptries, la lentille de la figure 4 présente une différence de sphère moyenne normalisée à l'addition, sur la méridienne entre le centre géométrique du verre et le point de référence en vision de loin VL, inférieure à 0,1 dioptrie. La variation de sphère moyenne sur la méridienne dans la partie supérieure de la lentille, au dessus de la croix de montage est sensiblement nulle, ainsi que la variation de sphère moyenne sur la méridienne en dessous du point de référence en vision de près.

On a aussi représenté sur la figure 4 la longueur de progression LP. Dans l'exemple de la figure 4, en appliquant la définition donnée en référence à la figure 1, une sphère moyenne de 0,85 x 2 dioptrie, c'est-à-dire de 1,70 dioptries est atteinte pour un point d'ordonnée y = -9,9 mm environ. La longueur de progression LP, entre la croix de montage CM d'ordonnée y = 4 mm et ce point de la méridienne pour lequel la sphère moyenne atteint 85% de l'addition, est égale à 13,9 mm. L'accessibilité aux puissances nécessaires en vision de près est donc inférieure à 14 mm. Par ailleurs, dans l'exemple de la figure 4 en appliquant la définition donnée en référence à la figure 1, la pente maximum de variation de sphère normalisée à l'addition est égale à $0.10 \text{ mm}^{-1}$. Elle donc comprise entre $0.09 \text{mm}^{-1}$ et $0.11 \text{mm}^{-1}$.

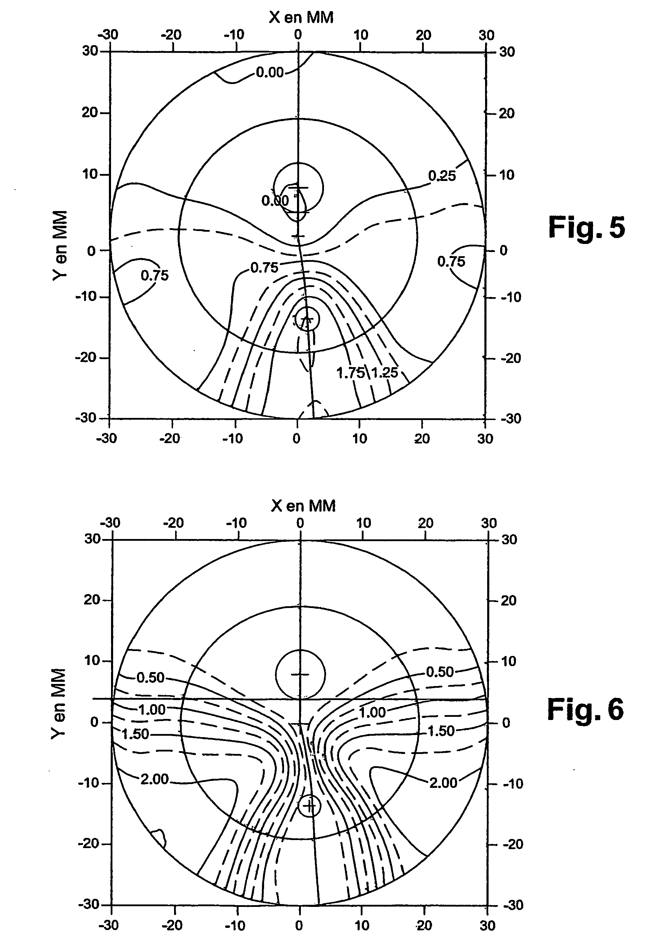

La figure 5 montre les lignes d'isosphère de 0 à 2 dioptries, avec un pas de 0,25 dioptrie. Comme sur la figure 2, on a représenté un cercle de rayon 20 mm centré sur le centre géométrique de la lentille. Le rebond de la variation de la valeur de la sphère le long de ce cercle, divisée par la valeur de l'addition A, est inférieure à 0,11.

La figure 11, qui sera décrite plus loin, représente une courbe de la variation de sphère normalisée à l'addition le long de ce cercle pour cette lentille présentant une addition de puissance de 2 dioptries sur la surface complexe.

La figure 6 montre les lignes d'isocylindre de 0,25 à 2 dioptries, avec un pas de 0,25 dioptries. Comme à la figure 3, on a représenté une ligne horizontale passant par la croix de montage. On vérifie sur la figure 6 comme sur la figure 3 que la valeur de cylindre, au dessus de la ligne horizontale passant par la croix de montage, est inférieure ou égale à 1,00 dioptrie, soit inférieure ou égale à la moitié de la valeur de l'addition de puissance. On vérifie également que dans la partie inférieure de la lentille, les lignes d'isocylindre 0,25 et 0,50 dioptrie délimitent une zone contenant le point de référence en vision de près VP.

Les figures 7 à 9 sont des vues similaires à celles des figures 1 à 3, mais pour une lentille présentant une addition de puissance de 3 dioptries sur la surface complexe.

On retrouve sur la figure 7 les caractéristiques déjà mises en évidence à la figure 1 - à ceci près que la progression de sphère moyenne sur la méridienne est de l'ordre de 3 dioptries et non plus de 1 dioptrie. La sphère moyenne à l'origine est de 3,45 dioptries. En particulier, dans l'exemple de la figure 7, la différence de sphère sur la méridienne, entre le centre géométrique du verre (0, 0) et le point de référence en vision de loin VL, est comprise entre 0,2 et 0,25 dioptrie. Néanmoins, dans cet exemple, l'addition de puissance étant de 3 dioptries, la lentille de la figure 7 présente une différence de sphère moyenne normalisée à l'addition, sur la méridienne entre le centre géométrique du verre et le point de référence en vision de loin VL, inférieure à 0,1 dioptrie. La variation de sphère moyenne sur la méridienne dans la partie supérieure de la lentille, au dessus de la croix de montage est sensiblement nulle, ainsi que la variation de sphère moyenne sur la méridienne en dessous du point de référence en vision de près.

On a aussi représenté sur la figure 7 la longueur de progression LP. Dans l'exemple de la figure 7, en appliquant la définition donnée en référence à la figure 1, une sphère moyenne de 0,85 x 3 dioptrie, c'est-à-dire de 2,55 dioptries est atteinte pour un point d'ordonnée y = -9,9 mm environ. La longueur de progression LP, entre la croix de montage CM d'ordonnée y = 4 mm et ce point de la méridienne pour lequel la sphère moyenne atteint 85% de l'addition, est égale à 13,9 mm. L'accessibilité aux puissances nécessaires en vision de près est donc inférieure à 14 mm. Par ailleurs, dans l'exemple de la figure 7 et en appliquant la définition donnée en référence à la figure 1, la pente maximum de variation de sphère normalisée à l'addition est égale à $0.10 \text{ mm}^{-1}$. Elle donc comprise entre $0.09 \text{mm}^{-1}$ et $0.11 \text{mm}^{-1}$.

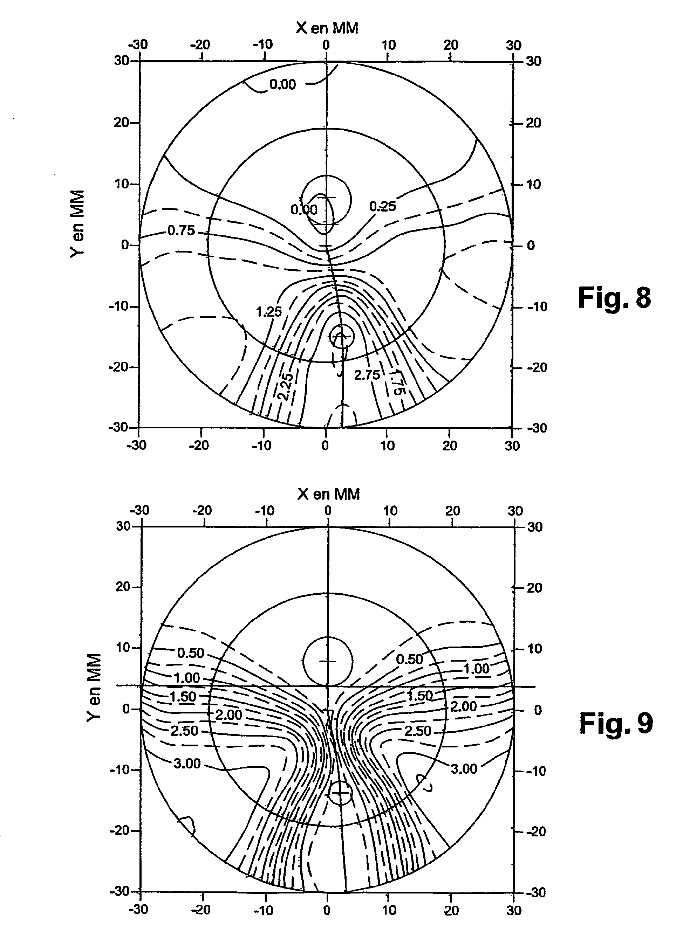

La figure 8 montre les lignes d'isosphère de 0 à 3 dioptries, avec un pas de 0,25 dioptrie. Comme sur la figure 2, on a représenté un cercle de rayon 20 mm centré sur le centre géométrique de la lentille. Le rebond de la variation de la valeur de la sphère le long de ce cercle, divisée par la valeur de l'addition A, est inférieure à 0,11.

La figure 12, qui sera décrite plus loin, représente une courbe de la variation de sphère normalisée à l'addition le long de ce cercle pour cette lentille présentant une addition de puissance de 3 dioptries sur la surface complexe

La figure 9 montre les lignes d'isocylindre de 0,25 à 3 dioptries, avec un pas de 0,25 dioptries. Comme à la figure 3, on a représenté une ligne horizontale passant par la croix de montage. On vérifie sur la figure 9 comme sur la figure 3 que la valeur de cylindre, au dessus de la ligne horizontale passant par la croix de montage, est inférieure ou égale à 1,50 dioptries, soit inférieure ou égale à la moitié de la valeur de l'addition de puissance. On vérifie également que dans la partie inférieure de la lentille, les lignes d'isocylindre 0,25 et 0,50 dioptrie délimitent une zone contenant le point de référence en vision de près VP.

Les figures 1 à 9 illustrent trois modes de réalisation de lentilles selon l'invention. Ces figures montrent bien que la zone de vision de loin est étendue en dessous de la croix de montage avec une différence de sphère moyenne normalisée à l'addition sur la méridienne, entre le centre géométrique du verre et le point de contrôle en vision de loin, inférieure ou égale à 0,1. Par ailleurs, ces figures montrent bien que l'accessibilité de la zone en vision de près est maintenue avec une longueur de progression inférieure ou égale à 14 mm entre la croix de montage et le point de la méridienne pour lequel la sphère moyenne atteint 85% de la progression de l'addition.

Les figures 10 à 12 montrent la variation de la sphère moyenne sur le cercle de diamètre 40 mm centré sur le centré géométrique de la lentille, pour différentes valeurs de l'addition. Les ordonnées sont graduées sans unités puisque les valeurs sont exprimées en valeurs de sphère (dioptrie) normalisée à l'addition (dioptrie). Les abscisses représentent l'angle $\theta$ dans un système de coordonnées polaires dont le centre est le centre géométrique de la lentille et dont les angles sont mesurés à partir de la demi-droite verticale dirigée vers le haut. La courbe de la figure 10 représente la variation de la sphère sur le cercle pour la lentille d'addition 1 dioptrie des figures 1 à 3 ; la courbe de la figure 11 représente la variation de la sphère sur le cercle pour la lentille d'addition 2 dioptries des figures 4 à 6 ; la courbe de la figure 12 représente la variation de la sphère sur le cercle pour la lentille d'addition 3 dioptries des figures 7 à 9.

Les figures 10 à 12 montrent que la valeur de la sphère augmente lorsque l'on se déplace sur le cercle depuis un point d'intersection du cercle avec la méridienne vers l'autre point d'intersection du cercle avec la méridienne pour atteindre un maximum absolu, puis la valeur de la sphère diminue lorsque l'on se déplace sur le cercle pour revenir vers le premier point d'intersection du cercle avec la méridienne pour définir un minimum absolu.

Chaque courbe de la variation de sphère normalisée à l'addition (figures 10 à 12) présente deux rebonds de part et d'autre du maximum absolu. Chaque rebond constitue une rupture de la variation monotone de la sphère. Cependant, selon l'invention, l'évolution de la sphère sur le cercle de rayon 20 mm centré sur le centre géométrique de la lentille présente des rebonds de faible amplitude lorsque l'on se déplace sur le cercle depuis un point d'intersection du cercle avec la méridienne vers l'autre point d'intersection du cercle avec la méridienne ; ce faible rebond de la sphère sur le cercle, de part et d'autre de la méridienne, assure une variation douce et uniforme des caractéristiques optiques de la lentille et assure un plus grande facilité d'adaptation du porteur aux lentilles.

La figure 10 représente la sphère normalisée à l'addition pour une lentille présentant une addition de puissance de 1 dioptrie, c'est-à-dire correspondant à la lentille des figures 1 à 3.

Le maximum absolue de la sphère normalisée à l'addition est atteint pour le point d'abscisse $\theta = 185°$; ce point correspond à l'intersection du cercle avec la méridienne dans la partie inférieure de la lentille, et présente dans le repère orthonormé défini plus haut les coordonnées x = 2,5 mm, y = - 20 mm.

Lorsque l'on parcourt le cercle, depuis le point d'angle $\theta = 0°$ vers le point d'angle $\theta = 185°$, la variation de la sphère normalisée présente un premier rebond $r_1$ ayant une valeur de 0,07 entre les points d'angle $\theta = 109°$ et $\theta = 135°$ ; lorsque l'on parcourt le cercle, depuis le point d'angle $\theta = 185°$ vers le point d'angle $\theta = 360°$, la variation de la sphère normalisée présente un second rebond $r_2$ ayant une valeur de 0,106 entre les points d'angle $\theta = 238°$ et $\theta = 263°$. Ainsi, le rebond de la quantité sphère normalisée à l'addition est inférieur à 0,11 pour la courbe de la figure 10.

La figure 11 représente la sphère normalisée à l'addition pour une lentille présentant une addition de puissance de 2 dioptries, c'est-à-dire correspondant à la lentille des figures 4 à 6.

Le maximum absolue de la sphère normalisée à l'addition-est atteint pour le point d'abscisse $\theta = 186°$; ce point correspond à l'intersection du cercle avec la méridienne dans la partie inférieure de la lentille, et présente dans le repère orthonormé défini plus haut les coordonnées x = 2,8 mm, y = - 19,5 mm.

Lorsque l'on parcourt le cercle, depuis le point d'angle $\theta = 0°$ vers le point d'angle $\theta = 186°$, la variation de la sphère normalisée présente un premier rebond $r_1$ ayant une valeur de 0,037 entre les points d'angle $\theta = 109°$ et $\theta = 135°$ ; lorsque l'on parcourt le cercle, depuis le point d'angle $\theta = 186°$ vers le point d'angle $\theta = 360°$, la variation de la sphère normalisée présente un second rebond $r_2$ ayant une valeur de 0,083 entre les points d'angle $\theta = 235°$ et $\theta = 260°$. Ainsi, le rebond de la quantité sphère normalisée à l'addition est inférieur à 0,11 pour la courbe de la figure 11.

La figure 12 représente la sphère normalisée à l'addition pour une lentille présentant une addition de puissance de 3 dioptries, c'est-à-dire correspondant à la lentille des figures 7 à 9.

Le maximum absolue de la sphère normalisée à l'addition est atteint pour le point d'abscisse $\theta = 185°$; ce point

correspond à l'intersection du cercle avec la méridienne dans la partie inférieure de la lentille, et présente dans le repère orthonormé défini plus haut les coordonnées x = 2,8 mm, y = - 20,5 mm.

Lorsque l'on parcourt le cercle, depuis le point d'angle $\theta = 0°$ vers le point d'angle $\theta = 185°$, la variation de la sphère normalisée présente un premier rebond $r_1$ ayant une valeur de 0,038 entre les points d'angle $\theta = 109°$ et $\theta = 134°$ ; lorsque l'on parcourt le cercle, depuis le point d'angle $\theta = 185°$ vers le point d'angle $\theta = 360°$, la variation de la sphère normalisée présente un second rebond $r_2$ ayant une valeur de 0,083 entre les points d'angle $\theta = 235°$ et $\theta = 261°$. Ainsi, le rebond de la quantité sphère normalisée à l'addition est inférieur à 0,11 pour la courbe de la figure 10.

Le tableau ci-dessous montre les valeurs caractéristiques des lentilles selon l'invention pour des valeurs d'addition. Dans le tableau, on a reporté pour chaque valeur de l'addition, la différence de sphère moyenne normalisée à l'addition sur la méridienne entre le centre géométrique du verre et le point de contrôle en vision de loin ; la longueur de progression ; le rebond maximal de la quantité sphère normalisée à l'addition sur le cercle de rayon 20 mm centré sur le centre géométrique de la lentille ; et la pente maximum de la variation sphère normalisée à l'addition le long de la méridienne.

| Addition (dioptrie) | Différence de sphère normalisée | Longueur de progression (mm) | Rebond normalisé | Maximum de pente sphère normalisée (mm$^{-1}$) |
|---|---|---|---|---|
| 1,00 | 0,082 | 13,7 | 0,106 | 0,09 |
| 2,00 | 0,054 | 13,9 | 0,083 | 0,10 |
| 3,00 | 0,054 | 13,9 | 0,083 | 0,10 |

La lentille selon l'invention se prescrit en considérant les prescriptions porteur en vision de loin et en vision de près ce qui détermine l'addition nécessaire. La puissance nécessaire peut être obtenue, comme dans l'état de la technique, par usinage d'une face arrière pour assurer que la puissance est identique à la puissance prescrite.

Le montage de la lentille dans un équipement visuel peut se faire de la manière suivante. La position horizontale de la pupille du porteur en vision de loin est mesurée, soit le demi-écart pupillaire uniquement, et la hauteur totale du calibre de la monture de l'équipement visuel est déterminée. La lentille est alors montée dans l'équipement visuel avec la croix de montage positionnée à la position mesurée.

On peut se référer sur ce point à la demande de brevet FR-A-2 807 169 décrivant un procédé de montage simplifié de lentilles ophtalmiques dans une monture. Ce document décrit en particulier les différentes mesures prises par les opticiens et propose de ne mesurer que le demi-écart pupillaire pour effectuer le montage des verres dans la monture en utilisant la hauteur totale du calibre de la monture.

Le montage de la lentille ne nécessite donc qu'une mesure classique du demi-écart pupillaire de vision de loin, ainsi qu'une mesure de la hauteur du calibre de la monture, pour déterminer la hauteur à laquelle doit être placé la croix de montage dans la monture. Le montage de la lentille dans la monture s'effectue simplement en mesurant la position dans la monture du regard du sujet en vision de loin; cette mesure s'effectue de façon classique, le sujet portant la monture et regardant à l'infini. On détoure en suite la lentille et on la monte dans la monture, de sorte que la croix de montage se trouve à la position mesurée.

La lentille selon l'invention permet une tolérance améliorée au montage décrit ci-dessus. Cette tolérance est apportée par une valeur de la sphère sensiblement constante autour de la croix de montage. En particulier, la valeur de la sphère moyenne normalisée est sensiblement nulle autour de la croix de montage. On peut en effet voir sur le figure qu'une ligne d'isosphère à 0 dioptrie entoure la croix de montage.

La lentille des trois exemples décrits plus haut peut être obtenue, par optimisation d'une surface suivant les méthodes d'optimisations connues en soi et décrites dans les documents de l'état de la technique cités plus haut relatifs aux lentilles multifocales progressives. On peut utiliser pour l'optimisation un ou plusieurs des critères exposés dans la description qui précède en référence aux figures 1 à 12, et notamment :

- une progression de sphère moyenne de 1 dioptrie ou plus;
- une différence de sphère moyenne normalisée à l'addition sur la méridienne, entre le centre géométrique du verre et le point de contrôle en vision de loin, inférieure ou égale à 0,1 ;
- une longueur de progression inférieure ou égale à 14 mm entre la croix de montage et le point de la méridienne pour lequel la sphère moyenne atteint 85% de la progression de l'addition ;
- un rebond de la quantité sphère normalisée à l'addition sur un cercle de rayon 20 mm centré sur le centre géométrique de la lentille inférieur à 0,11 ;
- une pente maximum de la variation de la sphère normalisée à l'addition le long de la méridienne comprise entre 0,09 et 0,11mm$^{-1}$.

Ces critères peuvent être combinés à d'autres, notamment à un ou plusieurs des critères proposés dans les exemples précédents. On peut aussi utiliser un ou plusieurs des critères suivants:

- une valeur de cylindre inférieure ou égale à la moitié de l'addition de puissance sur la partie de la lentille située au dessus d'une horizontale passant par la croix de montage ;
- une valeur de sphère moyenne sensiblement constante autour de la croix de montage.

Le choix de ces critères permet d'obtenir, par optimisation, une lentille. L'homme du métier comprend aisément que la lentille en cause ne présente pas nécessairement des valeurs correspondant exactement aux critères imposés; par exemple, il n'est pas indispensable que la valeur supérieure de la variation de sphère moyenne soit atteinte.

Dans les exemples d'optimisation ci-dessus, on a proposé d'optimiser une seule des faces des lentilles. Il est clair que dans tous ces exemples, on peut échanger facilement le rôle des surfaces avant et arrière. On peut aussi répartir indifféremment la progression de sphère sur l'une ou l'autre des deux surfaces de la lentille, ou partiellement sur une face et l'autre, du moment que des cibles optiques similaires à celles de la lentille décrite sont atteintes.

## Revendications

1. Une lentille ophtalmique pour lunettes présentant une surface complexe ayant un centre géométrique (0, 0), une croix de montage (CM), une méridienne sensiblement ombilique présentant une addition de puissance (A) entre un point de référence en vision de loin (VL) et un point de référence en vision de près (VP), la surface complexe ayant :

   - une différence de sphère moyenne normalisée a l'addition sur la méridienne, entre le centre géométrique (0, 0) du verre et le point de contrôle en vision de loin (VL), inférieure ou égale à 0,1 ;
   - une longueur de progression inferieure ou égale à 14 mm, la longueur de progression étant définie comme la distance verticale entre la croix de montage (CM) et le point de la méridienne pour lequel la sphère moyenne atteint 85% de la progression de l'addition;
   - un rebond de la quantité sphère normalisée à l'addition (Sphère/Addition) sur un cercle de rayon 20 mm centre sur le centre géométrique de la lentille inferieur à 0,11;
   - une pente maximum de la variation de la sphère normalisée à l'addition le long de la méridienne comprise entre 0,09 et 0,11 mm$^{-1}$.

2. La lentille de la revendication 1, **caractérisée en ce que** la différence de sphère moyenne normalisée à l'addition sur la méridienne, entre le centre géométrique (0, 0) du verre et le point de contrôle en vision de loin (VL), est inférieure ou égale à 0,06.

3. La lentille de la revendication 1 ou 2, **caractérisée en ce que** le rebond de la quantité sphère normalisée à l'addition sur le cercle de rayon 20 mm centré sur le centre géométrique de la lentille est inferieur à 0,085.

4. La lentille de l'une des revendications 1 à 3, **caractérisée en ce que** la surface complexe présente, pour la partie de la lentille située au dessus d'une horizontale passant par la croix de montage, une valeur de cylindre inférieure ou égale à la moitié de l'addition de puissance (A/2).

5. La lentille de l'une des revendications 1 a 4, **caractérisée en ce que** la surface complexe présente, autour de la croix de montage, une valeur de sphère moyenne sensiblement constante.

6. La lentille de la revendication 5, **caractérisée en ce que** la surface complexe présente une ligne d'isosphère à 0 dioptrie encerclant la croix de montage.

7. Un équipement visuel comportant au moins une lentille selon l'une des revendications précédentes.

8. Une lentille selon l'une des revendications 1 à 6, où la croix de montage (CM) est située à 4 mm au dessus du centre géométrique sur un axe vertical de la lentille.

## Patentansprüche

1. Ophthalmische Linse für eine Brille, die eine komplexe Fläche mit einem geometrischen Mittelpunkt (0, 0), einem Montagekreuz (CM), einem im Wesentlichen ombilischen Meridian aufweist, der eine Stärkenaddition (A) zwischen einem Fernsichtbezugspunkt (VL) und einem Nahsichtbezugspunkt (VP) aufweist, wobei die komplexe Fläche hat:

- einen mittleren Sphärenunterschied normiert auf die Addition auf dem Meridian zwischen der geometrischen Mitte (0, 0) des Glases und dem Fernsichtkontrollpunkt (VL), geringer als oder gleich 0,1;
- eine Progressionslänge geringer als oder gleich 14 mm, wobei die Progressionslänge als der senkrechte Abstand zwischen dem Montagekreuz (CM) und dem Punkt des Meridians definiert ist, für den die mittlere Sphäre 85% der Progression der Addition erreicht;
- einen Rebound der Sphärengröße normiert auf die Addition (Sphäre/Addition) auf einem Kreis mit einem Radius von 20 mm zentriert auf die geometrische Mitte der Linse geringer als 0,11;
- eine maximale Neigung der Variation der auf die Addition normierten Sphäre entlang des Meridians zwischen 0,09 und 0,11 mm$^{-1}$.

**2.** Linse nach Anspruch 1, **dadurch gekennzeichnet, dass** der mittlere Sphärenunterschied normiert auf die Addition auf dem Meridian zwischen der geometrischen Mitte (0, 0) des Glases und dem Fernsichtkontrollpunkt (VL) geringer als oder gleich 0,06 ist.

**3.** Linse nach Anspruch 1 oder 2, **dadurch gekennzeichnet, dass** der Rebound der Sphärengröße normiert auf die Addition auf dem Kreis mit dem Radius von 20 mm zentriert auf die geometrische Mitte der Linse geringer als 0,085 ist.

**4.** Linse nach einem der Ansprüche 1 bis 3, **dadurch gekennzeichnet, dass** die komplexe Fläche für den Bereich der Linse oberhalb einer durch das Montagekreuz gehenden Waagerechten einen Zylinderwert geringer als die oder gleich der Hälfte der Stärkenaddition (A/2) aufweist.

**5.** Linse nach einem der Ansprüche 1 bis 4, **dadurch gekennzeichnet, dass** die komplexe Fläche um das Montagekreuz herum einen im Wesentlichen konstanten mittleren Sphärenwert aufweist.

**6.** Linse nach Anspruch 5, **dadurch gekennzeichnet, dass** die komplexe Fläche eine Isosphärenlinie bei 0 Dioptrien aufweist, die das Montagekreuz umgibt.

**7.** Sehausrüstung, die mindestens eine Linse nach einem der vorhergehenden Ansprüche aufweist.

**8.** Linse nach einem der Ansprüche 1 bis 6, wobei das Montagekreuz (CM) sich 4 mm oberhalb der geometrischen Mitte auf einer senkrechten Achse der Linse befindet.


**Claims**

**1.** Ophthalmic spectacle lens possessing a complex surface having a geometric centre (0, 0), a fitting cross (CM), a substantially umbilic meridian possessing an add power (A) between a far-vision reference point (VL) and a near-vision reference point (VP), the complex surface having:

- a mean-sphere difference normalized to the add on the meridian, between the geometric centre (0, 0) of the glass and the far-vision checking point (VL), smaller than or equal to 0.1;
- a progression length smaller than or equal to 14 mm, the progression length being defined as the vertical distance between the fitting cross (CM) and the point on the meridian where the mean sphere reaches 85% of the progression of the add;
- a rebound in the sphere quantity normalized to the add (sphere/add) on a circle of 20 mm-radius centred on the geometric centre of the lens smaller than 0.11; and
- a maximum slope in the variation in the sphere normalized to the add along the meridian comprised between 0.09 and 0.11 mm$^{-1}$.

**2.** Lens according to Claim 1, **characterized in that** the mean-sphere difference normalized to the add on the meridian, between the geometric centre (0, 0) of the glass and the far-vision checking point (VL), is smaller than or equal to 0.06.

**3.** Lens according to either of Claims 1 and 2, **characterized in that** the rebound in the sphere quantity normalized to the add on the circle of 20 mm-radius centred on the geometric centre of the lens is smaller than 0.085.

4. Lens according to one of Claims 1 to 3, **characterized in that** the complex surface of the portion of the lens located above a horizontal line passing through the fitting cross has a cylinder value smaller than or equal to half the add power (A/2).

5. Lens according to one of Claims 1 to 4, **characterized in that** the complex surface has, around the fitting cross, a substantially constant average-sphere value.

6. Lens according to Claim 5, **characterized in that** the complex surface has a 0-dioptre isosphere line encircling the fitting cross.

7. Visual equipment comprising at least one lens according to one of the preceding claims.

8. Lens according to one of Claims 1 to 6, wherein the fitting cross (CM) is located 4 mm above the geometric centre on a vertical axis of the lens.

**Fig. 1**

**Fig. 2**

**Fig. 3**

Hauteur (mm)

40

30

20

10

-1    LP    0    1    2    3    4
C1,C2 Sphère (Dioptrie)

-10

A

-20

-30

-40

**Fig. 4**

**Fig. 5**

**Fig. 6**

**Fig. 7**

**Fig. 8**

**Fig. 9**

**Fig. 10**

**Fig. 11**

**Fig. 12**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2699294 A
- US 5270745 A
- US 5272495 A
- FR 2683642 A
- FR 2704327 A
- FR 2588973 A
- FR 2769997 A
- FR 2769999 A
- FR 2807169 A